# FASCICULE DE BREVET EUROPEEN

(11) **EP 4 101 702 B1**
(45) Date de publication et mention de la délivrance du brevet: **08.01.2025**
(21) Numéro de dépôt: 22177942.4
(22) Date de dépôt: 08.06.2022
(51) Int. Cl.: B60R 13/02, B60Q 3/14, B32B 3/26, B32B 7/12, B32B 27/20, B32B 27/12, B32B 27/30, B60Q 3/54

(54) **ELÉMENT DE GARNISSAGE**
EINSATZELEMENT
TRIM ELEMENT

(30) Priorité: 10.06.2021 FR 2106111
(43) Date de publication de la demande: 14.12.2022
(73) Titulaire: Faurecia Intérieur Industrie, 92000 Nanterre (FR)
(72) Inventeur: GARCIO, Valerio, 46920 MISLATA, VALENCIA (ES); CONEJERO NAVARRO, Efrain, 46901 VALENCIA (ES)
(74) Mandataire: Lavoix

(56) Documents cités:
- WO-A1-2018/054511
- WO-A1-2020/098665
- DE-A1- 102016 121 042
- DE-A1- 102016 217 949
- DE-A1- 102019 113 124

## Description

La présente invention concerne un élément de garnissage.

Il est connu d'équiper un élément de garnissage installé dans un véhicule avec un dispositif de rétroéclairage afin d'éclairer l'intérieur du véhicule et/ou un élément particulier de l'élément de garnissage, tel qu'un pictogramme, et/ou de définir un motif décoratif rétroéclairé sur la face externe de l'élément de garnissage, dans le but d'augmenter le confort du passager et/ou d'améliorer l'aspect extérieur de l'élément de garnissage.

Généralement, le dispositif d'éclairage est disposé sous une couche décorative perforée et la lumière émise par la dispositif d'éclairage illumine la surface extérieure de l'élément de garnissage par les perforations.

Dans le but d'augmenter le confort du passager, notamment si l'élément de garnissage définit un accoudoir, la couche de support, de préférence une couche souple, peut être disposée entre le dispositif d'éclairage et la couche décorative pour offrir un aspect moelleux à la surface extérieure de l'élément de garnissage.

L'aspect décoratif d'un tel élément de garnissage est malheureusement souvent insatisfaisant.

En effet, le passager peut voir à travers les perforations la surface s'étendant sous la couche décorative, en particulier lorsque le dispositif d'éclairage est éteint, ce qui dégrade l'aspect esthétique de l'élément de garnissage, plus particulièrement lorsque l'élément de garnissage est de couleur sombre.

Le document DE 10 2019 113124 A décrit un élément de garnissage comprenant un dispositif de rétro-éclairage.

Un but de l'invention est de proposer un élément de garnissage comprenant un dispositif de rétroéclairage et présentant un aspect décoratif satisfaisant.

A cet effet, l'invention a pour objet un élément de garnissage selon la revendication 1.

Grâce au fait qu'au moins l'une de la couche de support et de la couche de liaison présente la même couleur décorative que la face externe de la couche décorative, l'aspect de l'élément de garnissage apparait uniforme pour le passager, et également à travers perforations, en particulier lorsque le dispositif d'éclairage est éteint. L'élément de garnissage présente ainsi un aspect décoratif satisfaisant.

L'élément de garnissage selon l'invention comporte l'une ou plusieurs des caractéristiques des revendications 2 à 10, prise(s) isolement ou suivant toute combinaison techniquement possible.

L'invention sera mieux comprise à la lecture de la description qui va suivre, donnée uniquement à titre d'exemple, et faite en se référant aux dessins annexés, sur lesquels :
- la figure 1 est une vue schématique en coupe de l'élément de garnissage selon un premier mode de réalisation de l'invention ; et
- la figure 2 est une vue schématique en coupe de l'élément de garnissage selon un deuxième mode de réalisation de l'invention.

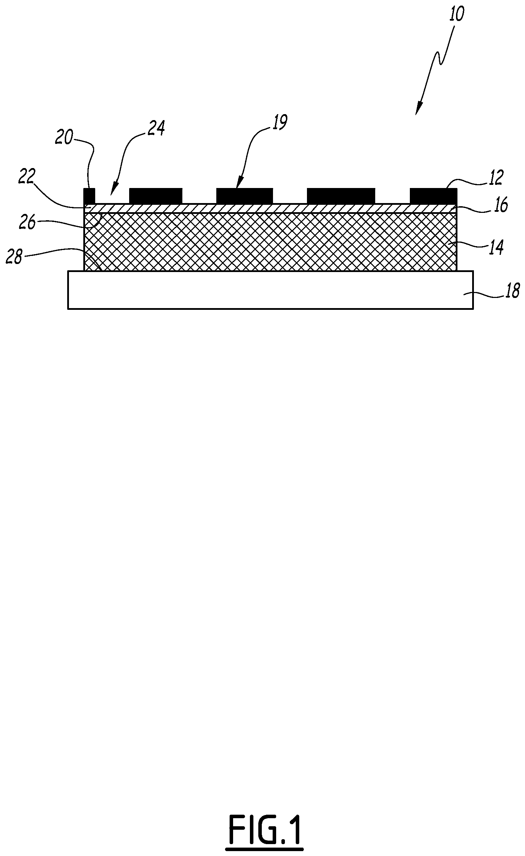

La figure 1 illustre un élément de garnissage 10 comprenant une couche décorative 12, une couche de support 14, une couche de liaison 16 entre la couche décorative 12 et la couche de support 14, et un dispositif d'éclairage 18 configuré pour éclairer au moins partiellement la surface extérieure 19 de l'élément de garnissage 10.

L'élément de garnissage 10 est par exemple un panneau de porte, une console centrale, un tableau de bord, ou un élément similaire configuré pour être installé à l'intérieur d'un véhicule.

La couche décorative 12 comprend une face externe 20 et une face interne 22 s'étendant en regard de la face externe 20.

La face externe 20 définit par exemple une surface de support pour le passager, comme un accoudoir.

La face externe 20 définit au moins partiellement la surface extérieure 19 de l'élément de garnissage 10.

En d'autres termes, la face externe 20 de la couche décorative 12 définit au moins partiellement la surface visible par le passager de l'extérieur de l'élément de garnissage 10, et confère ainsi son aspect esthétique à l'élément de garnissage 10.

Au moins la face externe 20 de la couche décorative 12 présente une couleur décorative visible par le passager.

La couche décorative 12 est par exemple composée d'une peau flexible, et de préférence fabriquée en cuir ou en chlorure de polyvinyle (PVC).

La couche décorative 12 est par exemple une peau en PVC noire ou de couleur sombre.

L'épaisseur de la couche décorative 12, c'est-à-dire la distance mesurée entre la face externe 20 et la face interne 22, est par exemple comprise entre 0,5 mm et 1,5 mm, et plus particulièrement entre 0,8 mm et 1,2mm.

La couche décorative 12 est opaque. Par opaque, on entend présentant un taux de transmission de la lumière dans le spectre visible inférieur à 5%, et de préférence proche de 0%. En d'autres termes, la couche décorative 12 empêche ainsi le passage de la lumière entre la face interne 22 et la face externe 20 de celle-ci.

Au moins une partie de la couche décorative 12 comprend une pluralité d'orifices 24.

Chaque orifice 24 est une ouverture traversante s'étendant entre la face interne 22 et la face externe 20 sur toute l'épaisseur de la couche décorative 12. En d'autres termes, chaque orifice 24 débouche à la fois sur la face externe 20 et sur la face interne 22 et s'étend sensiblement perpendiculaire à la face externe 20 et à la face interne 22.

Le passager peut voir, à travers les orifices 24, la couche s'étendant sous la couche décorative 12, ici la couche de liaison 16.

Les orifices 24 sont par exemple perforés dans la couche décorative 12.

L'ouverture définie par l'orifice 24 dans la face externe 20 peut avoir toute forme adéquate. Les orifices 24 forment par exemple des bandes uniformément réparties s'étendant sur au moins une partie de la face externe 20. Les orifices 24 sont alternativement de forme circulaire et définissent ensemble un motif sur la couche décorative 12.

La couche de support 14 comprend une face externe 26 et une face interne 28.

La face externe 26 est plus proche de la couche décorative 12, et plus particulièrement des orifices 24 de la couche décorative 12, que la face interne 28.

La couche de support 14 est translucide au moins en regard des orifices 24 de la couche décorative 12, et est de préférence translucide sur toute sa surface.

Par translucide, on entend présentant un taux de transmission de la lumière dans le spectre visible compris entre 5% et 100%, et de préférence supérieur à 50%. La lumière dans le spectre visible est ainsi apte à traverser la couche de support 14 entre la face interne 28 and la face externe 26.

La couche de support 14 présente avantageusement un aspect moelleux au toucher.

La couche de support 14 comprend au moins une couche souple. Une telle couche souple est fabriquée par un matériau flexible qui peut être facilement déformé élastiquement, par exemple par une pression exercée par un passager avec son doigt.

Une telle couche de support 14 souple présente l'avantage de conférer un aspect moelleux à l'élément de garnissage 10, ce qui est plus confortable pour le passager, en particulier lorsque l'élément de garnissage 10 définit un accoudoir.

A cet effet, la couche de support 14 est par exemple composée d'un tissu d'espacement.

Un tel tissu d'espacement comprend, par exemple, une première étoffe définissant la face externe 26 de la couche de support 14, une seconde étoffe définissant la face interne 28 de la couche de support 14, et des fils d'écartement reliant les deux étoffes entre elles. Les fils d'écartement apportent sa flexibilité au tissu d'espacement. Les étoffes et les fils d'écartement sont de préférence fabriqués par des fibres distribuées de manière éparse, afin de rester translucides.

L'épaisseur de la couche de support 14 est par exemple comprise entre 1,5 mm et 5 mm.

La couche de liaison 16 lie la face interne 22 de la couche décorative 12 avec la face externe 26 de la couche de support 14.

La couche de liaison 16 s'étend sur toute la surface de la face externe 26 de la couche de support 14 et sur toute la surface de la face interne 22 de la couche décorative 12, et plus particulièrement s'étend également en regard des orifices 24. En conséquence, le passager peut voir la couche de liaison 16 à travers les orifices 24.

La couche de liaison 16 est translucide au moins en regard des orifices 24 de la couche décorative 12, et est de préférence translucide sur toute sa surface.

En d'autres termes, la lumière dans le spectre visible est apte à traverser la couche de liaison 16, dans le but de sortir par les orifices 24 de la couche décorative 12.

La couche de liaison 16 est par exemple composée de colle.

Plus particulièrement, la colle constituant la couche de liaison 16 est choisie comme une colle à base d'eau.

La colle à base d'eau est composée d'un adhésif dissous dans l'eau. L'adhésif est par exemple un polymère synthétique tel que l'acétate de polyvinyle ou un polymère élastique tel que le latex.

La colle à base d'eau est par exemple répartie, par exemple par pulvérisation, sur la face externe 26 de la couche de support 14 afin de former la couche de liaison 16, et la face interne 22 de la couche décorative 12 est ensuite posée sur la couche de liaison 16. En alternative, la colle à base d'eau est répartie sur la face interne 22 de la couche décorative 12 et la face externe 26 de la couche de support 14 est posée sur la couche de liaison 16.

Lorsque l'eau s'évapore, l'adhésif se durcit et lie la face interne 22 de la couche décorative 12 avec la face externe 26 de la couche de support 14.

En alternative, la colle constituant la couche de liaison 16 est choisie comme une colle thermofusible.

La colle thermofusible est composée d'un matériau thermoplastique, comme de l'éthylène-acétate de vinyle par exemple.

Le matériau thermoplastique est appliqué dans un état fondu sur la face externe 26 de la couche de support 14, par exemple à l'aide d'un pistolet à colle, afin de former la couche de liaison 16, et la face interne 22 de la couche décorative 12 est posée sur la couche de liaison 16. En alternative, c'est l'inverse, le matériau thermoplastique est appliqué sur la face interne 22 de la couche décorative 12 et la face externe 26 de la couche de support 14 est posée sur la couche de liaison 16.

Lorsque le matériau thermoplastique refroidit, la couche de liaison 16 se solidifie et forme un lien solide entre la face interne 22 de la couche décorative 12 et la face externe 26 de la couche de support 14.

En alternative, la colle thermofusible est une colle activée par chaleur.

Le matériau thermoplastique est appliqué à froid sur l'une de la face interne 22 de la couche décorative 12 et de la face externe 26 de la couche de support 14.

Le matériau thermoplastique est ensuite chauffé, par exemple à une température comprise entre 50°C et 150°C, de sorte à activer les propriétés adhésives de la colle activée par chaleur et former un lien solide entre la face interne 22 de la couche décorative 12 et la face externe 26 de la couche de support 14 lorsque le matériau thermoplastique refroidit de nouveau.

L'épaisseur de la couche de liaison 16, c'est-à-dire la distance mesurée entre la face interne 22 de la couche décorative 12 et la face externe 26 de la couche de support 14, est comprise entre 2 µm et 500 µm, et de préférence entre 8 µm et 250 µm.

La faible épaisseur de la couche de liaison 16 autorise une bonne transmission de la lumière à travers ladite couche de liaison 16.

Selon l'invention, la couche de liaison 16 présente la même couleur décorative que la face externe 20 de la couche décorative 12.

A cet effet, la couche de liaison 16 comprend des pigments de la couleur décorative de la face externe 20 de la couche décorative 12.

Par exemple, si la couche décorative 12 présente une face externe 20 de couleur décorative noire, la colle est mélangée avec des pigments de couleur noir, comme des pigments de charbon par exemple.

La concentration de pigments dans la colle est de préférence comprise entre 0,1% et 1% de sorte à conférer la couleur souhaitée à la couche de liaison 16 tout en conservant les propriétés adhésives de la colle.

Le passager peut voir la couche de liaison 16 à travers les orifices 24 définis dans la couche décorative 12.

Ainsi, le passager voit par les orifices 24 la même couleur décorative que celle de la face externe 20 de la couche décorative 12.

Le dispositif d'éclairage 18 est configuré pour émettre une lumière en direction de la face interne 28 de la couche de support 14.

Le dispositif d'éclairage 18 émet de préférence une lumière blanche pour assurer une meilleure transmission de la lumière.

Le dispositif d'éclairage 18 est par exemple une boîte à lumière comprenant une source lumineuse disposée dans un boîtier avec des parois réfléchissantes pour diriger la lumière émise par la source lumineuse vers la surface extérieure 19, et plus particulièrement vers la face interne 28 de la couche de support 14.

La source lumineuse est par exemple une diode électroluminescente (DEL).

En alternative, le dispositif d'éclairage 18 est une plaque lumineuse comprenant un guide de lumière s'étendant contre face interne 28 de la couche de support 14 et une source lumineuse émettant de la lumière dans le guide de lumière. Le guide de lumière est disposé de sorte à éclairer en direction de la surface extérieure 19, et plus particulièrement vers la face interne 28 de la couche de support 14.

Comme autre alternative, le dispositif d'éclairage 18 est une nappe lumineuse comprenant une pluralité de sources lumineuses, par exemple des DELs, émettant de la lumière en direction de la face interne 28 de la couche de support 14.

La lumière ainsi émise traverse la couche de support 14, et plus particulièrement de la face interne 28 à la face externe 26, grâce à la translucidité au moins partielle de la couche de support 14.

La lumière émise traverse ensuite la couche de liaison 16 grâce à la translucidité au moins partielle de ladite couche de liaison 16.

La lumière émise traverse finalement les orifices 24 et éclaire la surface extérieure 19 de l'élément de garnissage 10 définie par la surface externe 20 de la couche décorative 12.

La lumière émise ne peut pas traverser la couche décorative 12, car celle-ci est opaque.

L'aspect esthétique d'un tel élément de garnissage 10 est satisfaisante, car, lorsque le dispositif d'éclairage 18 est éteint, la couleur vue à travers les orifices 24 est la même que la couleur décorative de la couche décorative 12, notamment grâce à la pigmentation de la couche de liaison 16.

De plus, la couche de support 14 de couleur blanche autorise une bonne transmission de la lumière émise par le dispositif d'éclairage 18.

En outre, la couche de support 14 d'un tel élément de garnissage 10 peut être choisie de sorte à conférer un aspect moelleux au toucher à l'élément de garnissage 10 pour augmenter le confort des passagers.

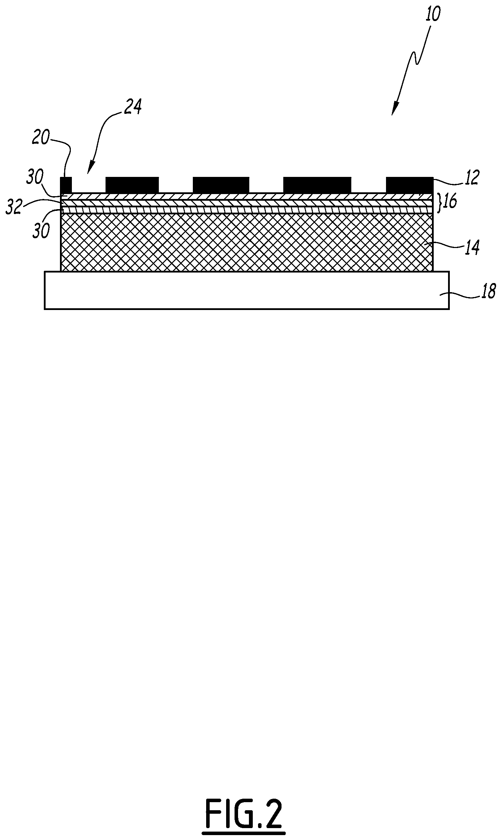

Dans un autre mode de réalisation de l'invention illustré sur la figure 2, la couche de liaison 16 n'est pas composée de colle, mais la couche de liaison 16 est un film comprenant deux couches adhésives 30 et au moins une couche intermédiaire 32.

La couche intermédiaire 32 est disposée entre les deux couches adhésives 30, à la manière d'un sandwich.

La couche intermédiaire 32 confère sa couleur et ses propriétés de transmission de la lumière à la couche de liaison 16.

La couche intermédiaire 32 comprend des pigments afin de présenter la même couleur décorative que la face externe 20 de la couche décorative 12.

La couche intermédiaire 32 est par exemple constituée d'une fine couche plastique, et est par exemple fabriquée en un matériau à base de polyéthylène.

En alternative, la couche de liaison 16 comprend une pluralité de couches intermédiaires 32, chacune conférant une propriété de couleur et de transmission de la lumière à la couche de liaison 16.

Les couches adhésives 30 sont par exemple constituées de colle et confèrent sa propriété de liaison à la couche de liaison 16.

Les couches adhésives 30 et la couche intermédiaire 32 sont compressées en température et pression, par exemple entre 0,8 bar et 1,2 bar et entre 100°C et 180°C, de sorte à former un film compact.

En alternative, les couches adhésives 30 et la couche intermédiaire 32 sont directement pulvérisées sur la face externe 26 de la couche de support 14 et/ou sur la face interne 22 de la couche décorative 12.

Dans un autre mode de réalisation de l'invention, la couche de support 14 présente la même couleur décorative que la face externe 20 de la couche décorative 12.

A cet effet, la couche de support 14 comprend des pigments de ladite couleur décorative.

Dans le cas où la couche de support 14 est un tissu d'écartement, les fibres et/ou les fils utilisés pour fabriquer la couche de support 14 sont avantageusement choisis pour être de la même couleur que la couleur décorative de la face externe 20 de la couche décorative 12.

Les pigments sont par exemple intégrés dans les fibres et/ou les fils du tissu d'écartement.

Dans le but d'augmenter la transmission de la lumière, dans ce mode de réalisation, la couche de liaison 16 est avantageusement choisie transparent et ne comprend pas de pigment.

Dans ce mode de réalisation de l'invention, le passager voit, par les orifices 24, la couleur décorative de la couche de support 14, qui est la même que celle de la face externe 20 de la couche décorative 12.

Dans un autre mode de réalisation de l'invention, la couche de support 14 et la couche de liaison 16 présentent toutes les deux la même couleur décorative que la face externe 20 de la couche décorative 12.

A cet effet, la couche de support 14, ainsi que la couche de liaison 16, comprennent des pigments de ladite couleur décorative.

Dans ce mode de réalisation de l'invention, la couleur décorative vue par le passager à travers les orifices est la même que celle de la face externe 20 de la couche décorative 12 et cette couleur est intensifiée par le fait que la couche de support 14 et la couche de liaison 16 présentent toutes les deux cette couleur.

## Revendications

1. Elément de garnissage (10) comprenant :
- une couche décorative (12) comprenant une face externe (20) définissant au moins partiellement la surface extérieure (19) de l'élément de garnissage (10), une face interne (22) opposée à la face externe (20), et une pluralité d'orifices (24) s'étendant entre la face externe (20) et la face interne (22), au moins la face externe (20) de la couche décorative (12) présentant une couleur décorative ;
- une couche de support (14) comprenant une face externe (26), une face interne (28) et au moins une couche souple, la couche de support (14) étant translucide au moins en regard des orifices (24) de la couche décorative (12) ;
- une couche de liaison (16) liant la face interne (22) de la couche décorative (12) avec la face externe (26) de la couche de support (14), ladite couche de liaison (16) étant translucide au moins en regard des orifices (24) de la couche décorative (12) ; et
- un dispositif d'éclairage (18) configuré pour émettre une lumière en direction de la face interne (28) de la couche de support (14), ladite lumière traversant la couche de support (14) et la couche de liaison (16) et éclairant au moins partiellement la surface extérieure (19) de l'élément de garnissage (10) par les orifices (24),
**caractérisé en ce que** au moins l'une de la couche de support (14) et de la couche de liaison (16) présente la même couleur décorative que la face externe (20) de la couche décorative (12).

2. Elément de garnissage selon la revendication 1, dans lequel la couche de liaison (16) est composée de colle.

3. Elément de garnissage selon la revendication 2, dans lequel la colle est choisie entre une colle thermofusible et une colle à base d'eau.

4. Elément de garnissage selon la revendication 1, dans lequel la couche de liaison (16) est un film comprenant deux couches adhésives (30) et au moins une couche intermédiaire (32), la couche intermédiaire (32) étant disposée entre les deux couches adhésives (30).

5. Elément de garnissage selon l'une quelconque des revendications 1 à 4, dans lequel l'épaisseur de la couche de liaison (16) est comprise entre 2 µm et 500 µm, de preference entre 8 µm and 250 µm.

6. Elément de garnissage selon l'une quelconque des revendications 1 à 5, dans lequel la couche de liaison (16) est de la même couleur décorative que la face externe (20) de la couche décorative (12) et la couche de support (14) est de couleur blanche.

7. Elément de garnissage selon l'une quelconque des revendications 1 à 5, dans lequel la couche de support (14) est de la même couleur décorative que la face externe (20) de la couche décorative (12).

8. Elément de garnissage selon l'une quelconque des revendications 1 à 7, dans lequel la couche décorative (12) est composée d'une peau flexible.

9. Elément de garnissage selon l'une quelconque des revendications 1 à 8, dans lequel la couche de support (14) est composée d'un tissu d'espacement.

10. Elément de garnissage selon l'une quelconque des revendications 1 à 9, dans lequel au moins l'une de la couche de support (14) et de la couche de liaison (16) comprend des pigments de la couleur décorative de la face externe (20) de la couche décorative (12).

## Patentansprüche

1. Verkleidungselement (10), umfassend:
- eine Dekorschicht (12), umfassend eine Außenfläche (20), die mindestens teilweise die Außenoberfläche (19) des Verkleidungselements (10) definiert, eine Innenfläche (22), die der Außenfläche (20) gegenüberliegt, und eine Vielzahl von Öffnungen (24), die sich zwischen der Außenfläche (20) und der Innenfläche (22) erstrecken, wobei mindestens die Außenfläche (20) der Dekorschicht (12) eine Dekorfarbe aufweist;
- eine Trägerschicht (14), umfassend eine Außenfläche (26), eine Innenfläche (28) und mindestens eine flexible Schicht, wobei die Trägerschicht (14) mindestens gegenüber den Öffnungen (24) in der Dekorschicht (12) durchscheinend ist;
- eine Verbindungsschicht (16), die die Innenfläche (22) der Dekorschicht (12) mit der Außenfläche (26) der Trägerschicht (14) verbindet, wobei die Verbindungsschicht (16) mindestens gegenüber den Öffnungen (24) in der Dekorschicht (12) durchscheinend ist; und
- eine Beleuchtungsvorrichtung (18), die konfiguriert ist, um Licht in Richtung der Innenfläche (28) der Trägerschicht (14) auszustrahlen, wobei das Licht durch die Trägerschicht (14) und die Verbindungsschicht (16) tritt und die Außenoberfläche (19) des Verkleidungselements (10) durch die Öffnungen (24) mindestens teilweise erhellt,
**dadurch gekennzeichnet, dass** das mindestens eine der Trägerschicht (14) und der Verbindungsschicht (16) die gleiche Dekorfarbe wie die Außenfläche (20) der Dekorschicht (12) aufweist.

2. Verkleidungselement nach Anspruch 1, wobei die Verbindungsschicht (16) aus Klebstoff besteht.

3. Verkleidungselement nach Anspruch 2, wobei der Klebstoff aus einem Schmelzklebstoff und einem Klebstoff auf Wasserbasis ausgewählt ist.

4. Verkleidungselement nach Anspruch 1, wobei die Verbindungsschicht (16) eine Folie ist, umfassend zwei Klebstoffschichten (30) und mindestens eine Zwischenschicht (32), wobei die Zwischenschicht (32) zwischen den zwei Klebstoffschichten (30) angeordnet ist.

5. Verkleidungselement nach einem der Ansprüche 1 bis 4, wobei die Dicke der Verbindungsschicht (16) zwischen 2 µm und 500 µm, vorzugsweise zwischen 8 µm und 250 µm beträgt.

6. Verkleidungselement nach einem der Ansprüche 1 bis 5, wobei die Verbindungsschicht (16) die gleiche Dekorfarbe wie die Außenfläche (20) der Dekorschicht (12) hat und die Trägerschicht (14) weiß ist.

7. Verkleidungselement nach einem der Ansprüche 1 bis 5, wobei die Trägerschicht (14) die gleiche Dekorfarbe wie die Außenfläche (20) der Dekorschicht (12) hat.

8. Verkleidungselement nach einem der Ansprüche 1 bis 7, wobei die Dekorschicht (12) aus einer flexiblen Haut besteht.

9. Verkleidungselement nach einem der Ansprüche 1 bis 8, wobei die Trägerschicht (14) aus einem Abstandsgewirk besteht.

10. Verkleidungselement nach einem der Ansprüche 1 bis 9, wobei mindestens eine der Trägerschicht (14) und der Verbindungsschicht (16) Pigmente der Dekorfarbe der Außenfläche (20) der Dekorschicht (12) umfasst.

## Claims

1. A trim element (10) comprising:
- a decorative layer (12) comprising an outer face (20) at least partially defining the outer surface (19) of the trim element (10), an inner face (22) opposite the outer face (20), and a plurality of openings (24) extending between the outer face (20) and the inner face (22), at least the outer face (20) of the decorative layer (12) having a decorative color;
- a support layer (14) comprising an outer face (26), an inner face (28) and at least one flexible layer, the support layer (14) being translucent at least opposite the openings (24) in the decorative layer (12);
- a bonding layer (16) bonding the inner face (22) of the decorative layer (12) to the outer face (26) of the support layer (14), said bonding layer (16) being translucent at least opposite the openings (24) in the decorative layer (12); and
- a lighting device (18) configured to emit light towards the inner face (28) of the support layer (14), said light passing through the support layer (14) and the bonding layer (16) and at least partially illuminating the outer surface (19) of the trim element (10) through the openings (24),
**characterized in that** at least one of the support layer (14) and the bonding layer (16) has the same decorative color as the outer face (20) of the decorative layer (12).

2. The trim element according to claim 1, wherein the bonding layer (16) is composed of adhesive.

3. The trim element according to claim 2, wherein the adhesive is selected from a hot-melt adhesive and a water-based adhesive.

4. The trim element according to claim 1, wherein the bonding layer (16) is a film comprising two adhesive layers (30) and at least one intermediate layer (32), the intermediate layer (32) being arranged between the two adhesive layers (30).

5. The trim element according to any one of claims 1 to 4, wherein the thickness of the bonding layer (16) is between 2 µm and 500 µm, preferably between 8 µm and 250 µm.

6. The trim element according to any one of claims 1 to 5, wherein the bonding layer (16) is of the same decorative color as the outer face (20) of the decorative layer (12) and the support layer (14) is white in color.

7. The trim element according to any one of claims 1 to 5, wherein the support layer (14) is of the same decorative color as the outer face (20) of the decorative layer (12).

8. The trim element according to any one of claims 1 to 7, wherein the decorative layer (12) is composed of a flexible skin.

9. The trim element according to any one of claims 1 to 8, wherein the support layer (14) is composed of a spacer fabric.

10. The trim element according to any one of claims 1 to 9, wherein at least one of the support layer (14) and the bonding layer (16) comprises pigments of the decorative color of the outer face (20) of the decorative layer (12).
